# EUROPEAN PATENT SPECIFICATION

(11) **EP 4 421 713 B1**
(45) Date of publication and mention of the grant of the patent: **29.10.2025**
(21) Application number: 24151327.4
(22) Date of filing: 11.01.2024
(51) Int. Cl.: G06Q 20/20, G06Q 20/34, G07G 1/01, G07G 3/00

(54) **STORE SERVER, METHOD, AND STORE SYSTEM**
SPEICHERSERVER, VERFAHREN UND SPEICHERSYSTEM
SERVEUR DE STOCKAGE, PROCÉDÉ ET SYSTÈME DE STOCKAGE

(30) Priority: 22.02.2023 JP 2023026400
(43) Date of publication of application: 28.08.2024
(73) Proprietor: Toshiba Tec Kabushiki Kaisha, Shinagawa-ku Tokyo 141-8562 (JP)
(72) Inventor: Aoki, Ken, Tokyo, 141-8562 (JP)
(74) Representative: Bandpay & Greuter

(56) References cited:
- US-A1- 2004 078 332
- US-A1- 2020 134 706

## Description

### FIELD

Embodiments of the present disclosure relate generally to a store server, a method, and a store system.

### BACKGROUND

In related art, in a shopping center, a volume seller ("big box retailer"), or a department store, a transaction involving a commodity sold in the store is performed using a commodity data processing device such as a POS (point-of-sale) terminal. The commodity data processing device performs a transaction with cash or in a non-cash manner.

Also known is US 2020/134706 A1 which discloses a checkout system including an information processing apparatus comprising a first processor and a first interface, and a mobile terminal comprising an input device that receives a first input of first data of a commodity to be purchased by a customer and a second input for executing a checkout process, a second interface, and a second processor that, upon receipt of the first input, controls the second interface to transmit the first data to the apparatus, and upon receipt of the second input, control the second interface to transmit a first notification to the apparatus.

As an example of the transaction in the non-cash manner, there is a case where a payment is made by electronic money with a monetary value added in advance to an electronic money account or the like. In such a transaction, the commodity data processing device acquires a member ID from a medium such as a membership card, and performs the transaction using the electronic money associated with the member ID.

Such a medium may become unusable for some reason. However, a salesclerk or the like who operates the commodity data processing device may not notice that the medium is unusable, and may attempt a settlement in a non-cash manner using the medium.

### DISCLOSURE OF THE INVENTION

To this end, a store server for managing customer information received by a point-of-sale (POS) terminal in a store, a method for managing customer information received by a point-of-sale (POS) terminal in a store, and a store system according to the appended claims are provided.

In the system according to the present invention, the store server is configured to: store in a memory the state of the medium acquired from the first server, and delete the state of the medium stored in the memory after determining that the medium is in the unusable state but before completing the sales transaction.

The present invention is as defined in the appended claims.

### BRIEF DESCRIPTION OF THE DRAWINGS

FIG. 1 is a diagram showing a system according to an embodiment.
FIG. 2 is a block diagram showing a hardware configuration of a POS terminal.
FIG. 3 is a block diagram showing a hardware configuration of a headquarters server.
FIG. 4 is a data structure of a member master database (DB).
FIG. 5 is a block diagram showing a hardware configuration of an external server.
FIG. 6 is a data structure of an electronic money management area.
FIG. 7 is a functional block diagram showing a functional configuration of the POS terminal.
FIG. 8 is a flowchart showing a flow of a control process for the POS terminal.
FIG. 9 is a diagram showing an example of a display of the POS terminal.
FIG. 10 is a diagram showing an example of another display.
FIG. 11 is a diagram showing an example of still another display.
FIG. 12 is a diagram showing an example of still another display.
FIG. 13 is a diagram showing an example of a display of a stop card error of the POS terminal.
FIG. 14 is a flowchart showing a flow of a control process for the headquarters server.
FIG. 15 is a flowchart showing a flow of a control process for the external server.

### DETAILED DESCRIPTION

Embodiments of this disclosure provide a point-of-sale terminal and a method that can prevent a settlement being performed in a non-cash manner from using an unusable electronic card medium or the like.

In general, according to one embodiment falling outside the scope of the appended claims, a store server for managing customer information received by a point-of-sale (POS) terminal in a store, comprises: a network interface connectable to the POS terminal and a first server that stores information about a customer of the store, the information associating identification information of the customer with a state of a medium issued to the customer that is usable for payment in a sales transaction via the POS terminal; and a processor configured to: acquire identification information of a customer from the POS terminal in a sales transaction, control the network interface to transmit the acquired identification information to the first server, acquire from the first server the state of the medium issued to the customer, and determine whether the medium is in an unusable state, upon determining that the medium is in a usable state, cause the POS terminal to accept the medium for payment in the sales transaction, and upon determining that the medium is in the unusable state, cause the POS terminal to display a message indicating that the medium is unusable for payment.

Hereinafter, embodiments of the disclosure will be described with reference to the drawings.

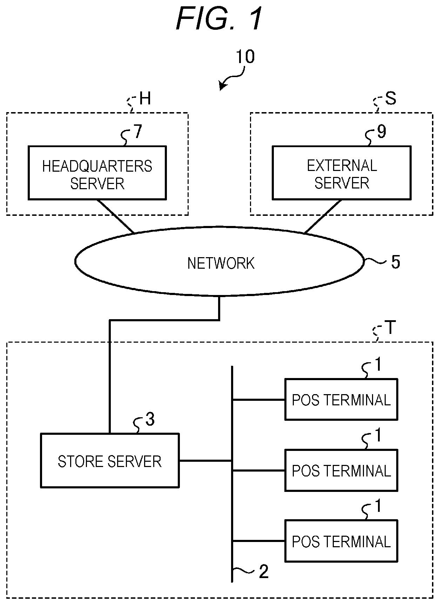

FIG. 1 is a diagram showing a store or POS system 10 according to an embodiment. The store system 10 provides a service for customers who are registered members of a store T. Here, the store T is a supermarket, a volume seller, a convenience store, a specialist shop, or the like, and the store sells commodities displayed in the store. In addition, the member refers to a customer who is registered as a member of the store T or a corresponding company operating the store T, and such a registered customer or member can receive a particular service when purchasing a commodity in the store T.

When a customer registers as a member, the new member receives a medium from the store T. The medium is, for example, a membership card. The membership card electrically and/or magnetically stores a member identification (ID, member identification information) for identifying the member. In some examples, the member ID may be represented by a code symbol such as a bar code or a two-dimensional code printed on the membership card. A customer terminal such as a mobile phone, a smartphone, a personal digital assistant (PDA), a tablet terminal, or the like, carried by a customer may also or instead store and display a member ID. For example, the customer terminal may display the code symbol representing the member ID. The medium may be any type as long as it is portable, can store a member ID, can indicate or display a code symbol representing a member ID and in a manner readable by the POS terminal. In the following description, the membership card is used as an example of a medium used for this purpose.

Such a system 10 provides, to a member, a service unique to the member (individualized service). A service unique to a member can be, for example, to give points to the member and enable purchase of a commodity with the points. Another service unique to a member can be, for example, to enable a member to perform a settlement in a non-cash manner using electronic money. Hereinafter, a settlement using accumulated reward points or the like and a settlement using an electronic money card will be described as examples of individualized services provided to a member. In addition, settlement using points and settlement using an electronic money card will be described as an example of the settlement performed in the non-cash manner. The member can receive these services by presenting the membership card.

As shown in FIG. 1, the system 10 includes one or more POS terminals 1 and a store server 3 provided in the store T, a headquarters server 7 provided in a headquarters H of a company that operates the store T, and an external server 9 provided in another company S that issues electronic money used by a member and manages electronic money information. The store server 3 may not be provided in the system 10.

The POS terminals 1 and the store server 3 are connected by a communication line 2 such as a local area network (LAN) in the store T. The store server 3, the headquarters server 7, and the external server 9 can be connected to a network 5 such as the Internet line, and are connected to one another via the network 5.

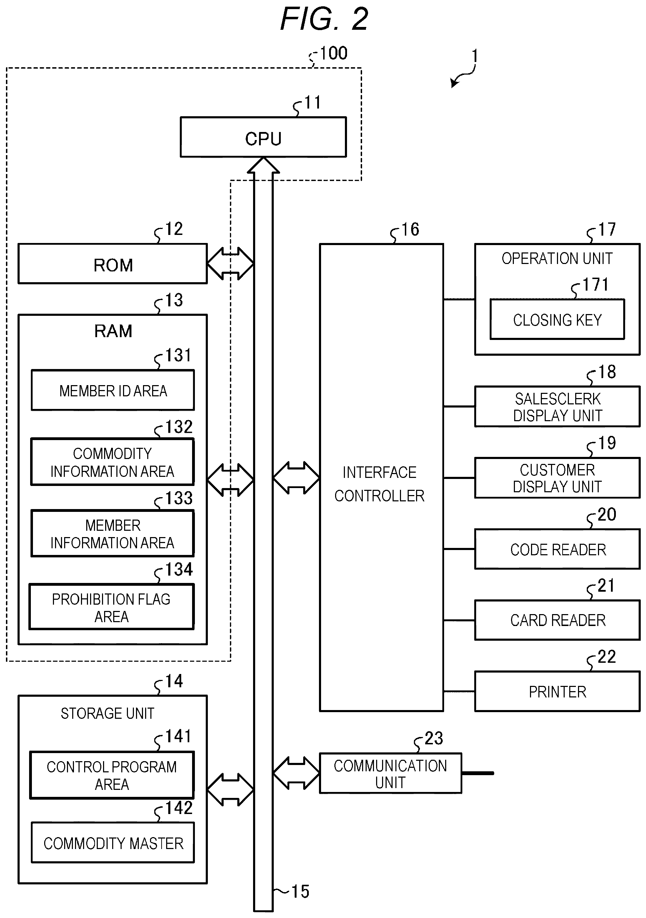

One or more (three in the example of FIG. 1) POS terminals 1 are provided in a checkout area in the store T. The POS terminal 1 is a commodity data processing device that executes a commodity registration process and a settlement process related to commodities sold in the store T. The commodity registration process refers to a process of acquiring a commodity code for identifying a commodity sold in the store T, displaying commodity information such as a commodity name and a price of the commodity on a display unit based on the acquired commodity code, and storing the commodity information in a commodity information area 132 (see FIG. 2). The settlement process refers to a summing up process related to a transaction, specifically, display of a total amount of payment, a settlement process using cash, a credit card, or electronic money, a process of calculating and displaying bills and coins deposited in a cash settlement, a process of dispensing a receipt on which the commodity information and checkout information (e.g., the total amount of payment, deposit amount, deposited bill and coin amount, point information, and the like) of the commodity subjected to the settlement process are printed from a printer 22 (see FIG. 2), and the like, based on the commodity information stored in the commodity information area 132 according to the commodity registration process.

The POS terminal 1 transmits the commodity information and the checkout information (collectively referred to as "sales data") of the commodity subjected to the settlement process to the store server 3. The transmission of the sales data from the POS terminal 1 to the store server 3 is performed at a timing when a checkout process is ended, or may be performed at any timing, for example, a timing at which the sales data collectively for one day is transmitted when the store T is closed.

The store server 3 is provided in an office of the store T. The store server 3 collects the sales data received from each POS terminal 1. The store server 3 manages sales of commodities of the store T based on the collected sales data. The store server 3 transmits the member ID received from the POS terminal 1 to the headquarters server 7 or the external server 9. The store server 3 transmits member information received from the headquarters server 7 to the POS terminal 1. The store server 3 transmits the electronic money information received from the external server 9 to the POS terminal 1.

The headquarters server 7 is provided in the headquarters H of the company that operates the store T. The headquarters server 7 totalizes sales data of each store T received from the store servers 3 of the stores T, manages other sales information of each store T, and also manages (tracks) sales of the entire company overall.

The headquarters server 7 manages points owned by each member. That is, the headquarters server 7 stores points for each member ID. The points have a monetary value when within the company, and a predetermined number of points may be used instead of cash (that is, as a non-cash payment) in the store T, so that a commodity can be purchased. When a member purchases a commodity, the points may be earned at a predetermined ratio with respect to a purchase price of the purchased commodity item. The headquarters server 7 accumulates and stores the earned points for each member ID.

The external server 9 is owned by a company S, which is different from the company that operates the store T. The company S is, for example, a company that manages electronic money information used by a plurality of different companies operating their own stores. The external server 9 stores the electronic money information transmitted from the headquarters server 7 or the store server 3 for each member ID. The electronic money can be obtained by, for example, depositing cash at the store T and converting the deposited amount into electronic money data. For example, the POS terminal 1 in the store T converts cash of 1000 yen into electronic money with a monetary value equivalent to 1000 yen or more than 1000 yen when some promotional premiums or the like are added. The external server 9 collects the electronic money data generated in this manner and tracks the information for each member ID. The monetary value included in the electronic money data can be is used instead of cash (that is, as a non-cash payment), so that a commodity can be purchased.

For example, when a member loses his or her membership card, it may be necessary to make the membership card unusable such that the membership card is not used by other people who are not the member. In this case, the POS terminal 1 or the store server 3 performs a process making the membership card unusable (invalidated). The information on the membership card that is subjected to the invalidation process in such a manner is transmitted to the headquarters server 7, and the headquarters server 7 stores the unusable membership card as an "unusable card" in association with the member ID. In addition to the loss of the membership card, there are cases where the membership card becomes the unusable card, e.g., when the membership card is expired.

Next, a hardware configuration of the POS terminal 1 will be described. FIG. 2 is a block diagram showing the hardware configuration of the POS terminal 1. As shown in FIG. 2, the POS terminal 1 includes a central processing unit (CPU) 11 as an example of a processor, a read only memory (ROM) 12, a random access memory (RAM) 13, and a storage unit 14. The CPU 11 controls the operation of the POS terminal 1. The ROM 12 stores various programs. The RAM 13 temporarily stores programs and various kinds of data. The storage unit 14 stores various programs. The CPU 11, the ROM 12, the RAM 13, and the storage unit 14 are connected to one another via a bus 15. The CPU 11, the ROM 12, and the RAM 13 constitute a control unit or main controller 100. That is, the CPU 11 or the control unit 100 executes control processes of the POS terminal 1 according to a control program stored in the ROM 12 or the storage unit 14 and loaded into the RAM 13.

The RAM 13 includes a member ID area 131, a commodity information area 132, a member information area 133, and a prohibition flag area 134. The member ID area 131 stores a member ID magnetically or electrically acquired by a card reader 21 or a member ID acquired based on a code symbol imaged or optically read by a code reader 20. The commodity information area 132 stores commodity information (e.g., a commodity code for identifying a commodity, commodity name, price, and the like) of a commodity subjected to the commodity registration process. The member information area 133 stores the member information of the member identified by the member ID that is acquired from the headquarters server 7 via the store server 3 in response to the transmission of the member ID.

The prohibition flag area 134 stores a flag indicating whether the membership card corresponding to the acquired member ID is an unusable card. This flag is also a flag indicating whether the member can perform a settlement as a member (i.e., whether the member can perform a settlement by electronic money, and whether the member can use or receive points). If the flag stored in the prohibition flag area 134 is "1", the flag indicates that the membership card is an unusable card. If the flag stored in the prohibition flag area 134 is "0", the flag indicates that the membership card is not an unusable card.

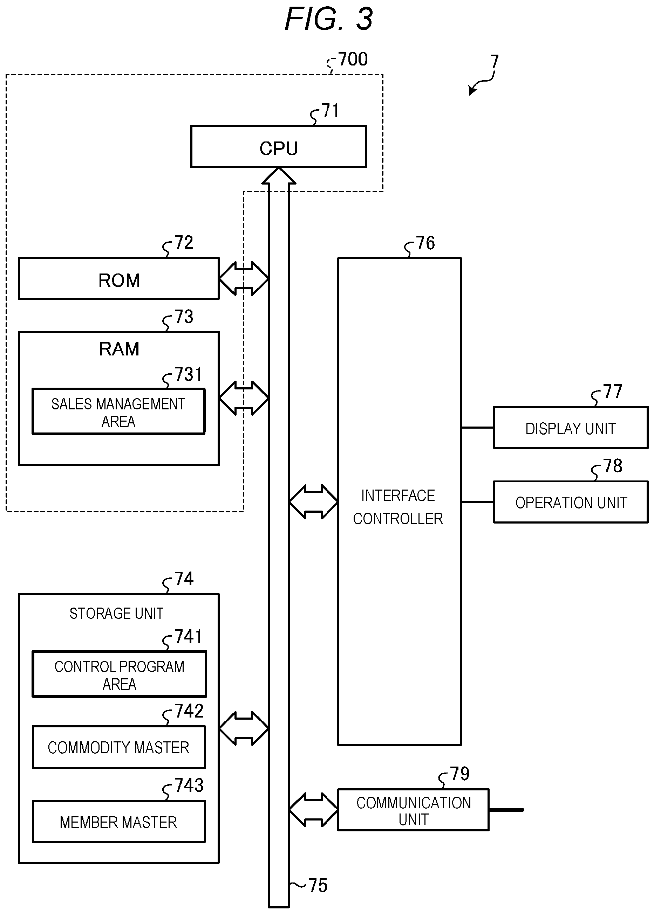

The storage unit 14 includes a nonvolatile storage device such as a hard disk drive (HDD) or a flash memory in which stored information is maintained even when power is turned off, and includes a control program area 141 that stores a control program and a commodity master database (DB) 142. The commodity master DB 142 stores commodity information of each commodity in association with a commodity code for identifying the commodity. The commodity master DB 142 has the same configuration as a commodity master DB 742 (see FIG. 3).

The control unit 100 is connected to an operation unit 17, a salesclerk display unit 18, a customer display unit 19, the code reader 20, the card reader 21, and the printer 22 via the bus 15 and an interface controller 16.

The operation unit 17 includes a closing key 171. The closing key 171 is a key to be operated when the POS terminal 1 advances a process from the commodity registration process to the settlement process. The salesclerk display unit 18 is, for example, a liquid crystal display (LCD), and displays information for an operator (for example, a salesclerk) who operates the POS terminal 1. The customer display unit 19 is, for example, an LCD, and displays information for customers and members. The operation unit 17 includes touch panels provided on the salesclerk display unit 18 and the customer display unit 19. The code reader 20 images or optically reads a code symbol attached to a commodity. When the code symbol including the member ID is displayed on the membership card, the code reader 20 images or optically reads the code symbol. In an embodiment, the code reader 20 images and reads the code symbol. The card reader 21 reads card information from a credit card, a debit card, an electronic money card (e.g., a membership card), or the like when a settlement process is performed using the corresponding card. The printer 22 dispenses a receipt on which receipt information including commodity information and settlement information related to a commodity subjected to the settlement process is printed.

The interface controller 16 receives an instruction from the control unit 100 and controls the operation unit 17, the salesclerk display unit 18, the customer display unit 19, the code reader 20, the card reader 21, and the printer 22. However, for convenience of description, it is assumed that the control performed by the interface controller 16 is performed by the control unit 100.

The control unit 100 is connected to a communication unit 23 via the bus 15. The communication unit 23 is a network interface circuit communicably connected to the store server 3 via the communication line 2.

Next, a hardware configuration of the headquarters server 7 will be described. FIG. 3 is a block diagram showing the hardware configuration of the headquarters server 7. As shown in FIG. 3, the headquarters server 7 includes a CPU 71 (processor), a ROM 72, a RAM 73, and a storage unit 74. The CPU 71 controls the operation of the headquarters server 7. The ROM 72 stores various programs. The RAM 73 temporarily stores programs and various kinds of data. The storage unit 74 stores various programs. The CPU 71, the ROM 72, the RAM 73, and the storage unit 74 are connected to one another via a bus 75. The CPU 71, the ROM 72, and the RAM 73 constitute a control unit or main controller 700. That is, the CPU 71 of the control unit 700 executes control processes of the headquarters server 7 according to a control program stored in the ROM 72 or the storage unit 74 and loaded into the RAM 73.

The RAM 73 includes a sales management area 731. The sales management area 731 collects the sales data received from each store server 3 and stores the sales data as sales information for each store T or sales information of the entire company.

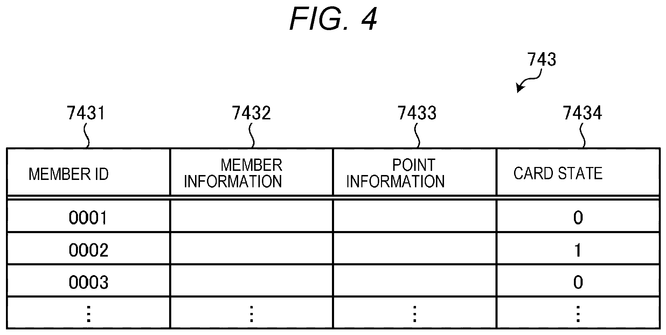

The storage unit 74 includes a nonvolatile storage device such as an HDD or a flash memory in which stored information is maintained even when power is turned off, and includes a control program area 741, a commodity master DB 742, and a member master DB 743. The control program area 741 stores a control program for controlling the headquarters server 7. The commodity master DB 742 stores commodity information of each commodity in association with a commodity code for identifying the commodity. The member master DB 743 stores member information of members registered as members. The member master DB 743 will be described later with reference to FIG. 4.

The control unit 700 is connected to a display unit 77 and an operation unit 78 via a bus 75 and an interface controller 76. The display unit 77 is, for example, a liquid crystal display, and displays information for an operator of the headquarters server 7. The operation unit 78 is a keyboard operated by an operator.

The interface controller 76 receives an instruction from the control unit 700 and controls the display unit 77 and the operation unit 78. However, for convenience of description, it is assumed that the control performed by the interface controller 76 is performed by the control unit 700.

The control unit 700 is connected to a communication unit 79 via the bus 75. The communication unit 79 is a network interface circuit communicably connected to the store server 3 of each store T and the external server 9 via the network 5.

Next, the member master DB 743 that stores member information will be described. FIG. 4 is a data structure of the member master DB 743. As shown in FIG. 4, the member master DB 743 includes a member ID field 7431, a member information field 7432, a point information field 7433, and a card state field 7434.

The member ID field 7431 stores a member ID for identifying a member. The member information field 7432 stores various pieces of information (e.g., a member name, an address, a telephone number, an e-mail address, and the like) of a member identified by the member ID stored in the member ID field 7431. The member information field 7432 stores a purchase history of commodities purchased by the member in the past. The point information field 7433 stores information of points owned by the member. The member is identified by the member ID stored in the member ID field 7431. When the member purchases a commodity, the number of points corresponding to the payment amount is added to the points stored in the point information field 7433. When the member uses some points, the used points are deducted from the points stored in the point information field 7433.

The card state field 7434 stores flag information indicating whether the membership card that is carried by the member identified by the member ID stored in the member ID field 7431 is an unusable card. If the flag stored in the card state field 7434 is "1", the flag indicates that the membership card is the unusable card. If the flag stored in the card state field 7434 is "0", the flag indicates that the membership card is not the unusable card. In the case of the example in FIG. 4, a membership card owned by a member whose member ID is "0001" and a membership card owned by a member whose member ID is "0003" are not unusable cards, and a membership card owned by a member whose member ID is "0002" is an unusable card.

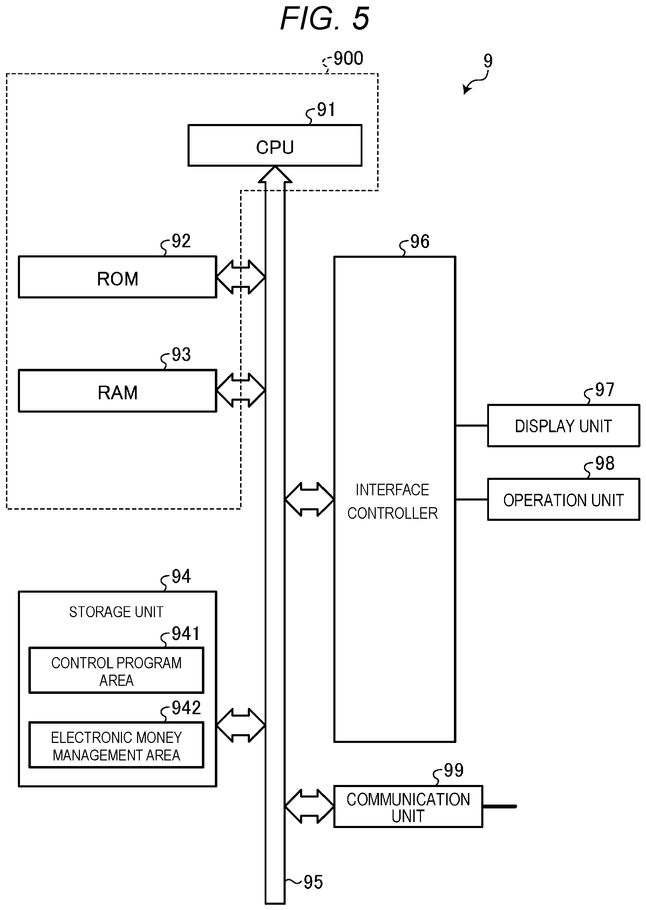

Next, a hardware configuration of the external server 9 will be described. FIG. 5 is a block diagram showing the hardware configuration of the external server 9. As shown in FIG. 5, the external server 9 includes a CPU 91 (processor), a ROM 92, a RAM 93, and a storage unit 94. The CPU 91 controls the operation of the external server 9. The ROM 92 stores various programs. The RAM 93 temporarily stores programs and various kinds of data. The storage unit 94 stores various programs. The CPU 91, the ROM 92, the RAM 93, and the storage unit 94 are connected to one another via a bus 95. The CPU 91, the ROM 92, and the RAM 93 constitute a control unit or main controller 900. That is, the control unit 900 executes control processes of the external server 9 described later by the CPU 91 operating according to a control program stored in the ROM 92 or the storage unit 94 and loaded in the RAM 93.

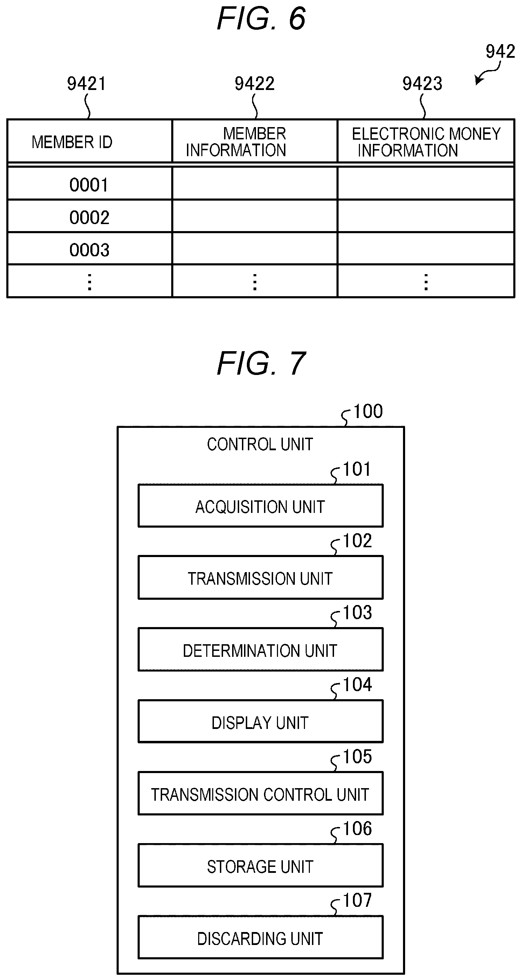

The storage unit 94 includes a nonvolatile storage device such as an HDD or a flash memory in which stored information is maintained even when power is turned off, and includes a control program area 941 and an electronic money management area 942. The control program area 941 stores a control program for controlling the external server 9. The electronic money management area 942 stores electronic money information related to a member. The electronic money information is, for example, monetary value information for the electronic money owned by or associated with a member. The electronic money management area 942 will be described later with reference to FIG. 6.

The control unit 900 is connected to a display unit 97 and an operation unit 98 via the bus 95 and an interface controller 96. The display unit 97 is, for example, an LCD, and displays information for an operator of the external server 9. The operation unit 98 is a keyboard operated by an operator.

The interface controller 96 receives an instruction from the control unit 900 and controls the display unit 97 and the operation unit 98. However, for convenience of description, it is assumed that the control performed by the interface controller 96 is performed by the control unit 900.

The control unit 900 is connected to a communication unit 99 via the bus 95. The communication unit 99 is a network interface circuit communicably connected to the store server 3 of each store T and the headquarters server 7 via the network 5.

Next, the electronic money management area 942 that stores electronic money information will be described. FIG. 6 is a data structure of the electronic money management area 942. As shown in FIG. 6, the electronic money management area 942 includes a member ID field 9421, a member information field 9422, and an electronic money information field 9423.

The member ID field 9421 stores a member ID for identifying a member. In this example, the member ID stored in the member ID field 9421 is the same member ID as the member ID stored in the member ID field 7431 of the headquarters server 7. However, even for the same member, the member ID stored in the member ID field 9421 and the member ID stored in the member ID field 7431 of the headquarters server 7 may be different member IDs. In this case, the member master DB 743 stores the member ID stored in the member ID field 7431 and the member ID stored in the member ID field 9421, which are related to the same member, in association with each other.

The member information field 9422 stores various pieces of information of a member (e.g., a member name, an address, a telephone number, an e-mail address, and the like) identified by a member ID stored in the member ID area 9421. The electronic money information area 9423 stores electronic money information (e.g., information about an amount of electronic money (monetary value) that can be used as electronic money payments for a settlement performed in a non-cash manner) that is owned by a member identified by a member ID stored in the member ID area 9421. When the member performs a settlement using electronic money, the amount of used electronic money is deducted from the amount stored in the electronic money information field 9423. When the electronic money is newly charged, an amount of charged electronic money is added to the amount stored in the electronic money information field 9423.

Next, a functional configuration of the POS terminal 1 will be described. FIG. 7 is a functional block diagram showing the functional configuration of the POS terminal 1. The control unit 100 or CPU 11 of the POS terminal 1 functions as an acquisition unit 101, a transmission unit 102, a determination unit 103, a display unit 104, a transmission control unit 105, a storage unit 106, and a discarding unit 107 by executing the control program stored in the ROM 12 or the control program area 141 of the storage unit 14.

The acquisition unit 101 acquires a member ID for identifying a member. Specifically, the acquisition unit 101 acquires the member ID from the membership card, for example. In an embodiment, the acquisition unit 101 acquires the member ID electrically or magnetically stored in the membership card from the card reader 21 or acquires the member ID by the code reader 20 imaging the code symbol shown on the membership card. The acquisition unit 101 may acquire the member ID by the code reader 20 imaging the code symbol displayed on the customer terminal.

The transmission unit 102 controls the communication unit 23 to directly or indirectly transmit the member ID acquired by the acquisition unit 101 to the headquarters server 7 that stores the member information of the member in association with the member ID. Specifically, the transmission unit 102 controls the communication unit 23 to transmit the member ID acquired by the acquisition unit 101 to the headquarters server 7 that stores the member information of the member in association with the member ID via the store server 3 (that is, indirectly).

The determination unit 103 determines whether the membership card for the member identified by the member ID can be used based on the member information that is directly or indirectly received from the headquarters server 7 and that is related to the transmitted member ID. Specifically, the determination unit 103 determines whether a medium for the member identified by the transmitted member ID is an unusable card based on the member information that is received from the headquarters server 7 via the store server 3 (that is, indirectly) and that is related to the transmitted member ID.

If the determination unit 103 determines that the membership card is unusable, the display unit 104 controls at least one of the salesclerk display unit 18 and the customer display unit 19 to display a message indicating that the membership card is unusable. Specifically, when the determination unit 103 determines that the membership card is the unusable card, the display unit 104 controls at least one of the salesclerk display unit 18 and the customer display unit 19 to display the message indicating that the membership card is unusable.

If it is determined that the membership card is usable, the transmission control unit 105 controls the communication unit 23 to transmit the member ID directly or indirectly via the store server 3 to the external server 9 that stores information for the member to perform a settlement by the electronic money (that is, information for performing a settlement in the non-cash manner), and if it is determined that the membership card is unusable, the transmission control unit 105 does not control the communication unit 23 to transmit the member ID to the external server 9. Specifically, if the determination unit 103 determines that the membership card is not the unusable card, the transmission control unit 105 controls the communication unit 23 to transmit, via the store server 3 (that is, indirectly), the member ID to the external server 9 that stores the information for the member to perform a settlement by the electronic money, and if the determination unit 103 determines that the membership card is the unusable card, the transmission control unit 105 does not control the communication unit 23 to transmit the member ID to the external server 9.

The storage unit 106 stores the received member information. Specifically, the storage unit 106 stores the member information received from the headquarters server 7 via the store server 3 (that is, indirectly).

If it is determined that the membership card is unusable, the discarding unit 107 discards the member information stored in the storage unit 106. The discarding means deleting or not using the member information.

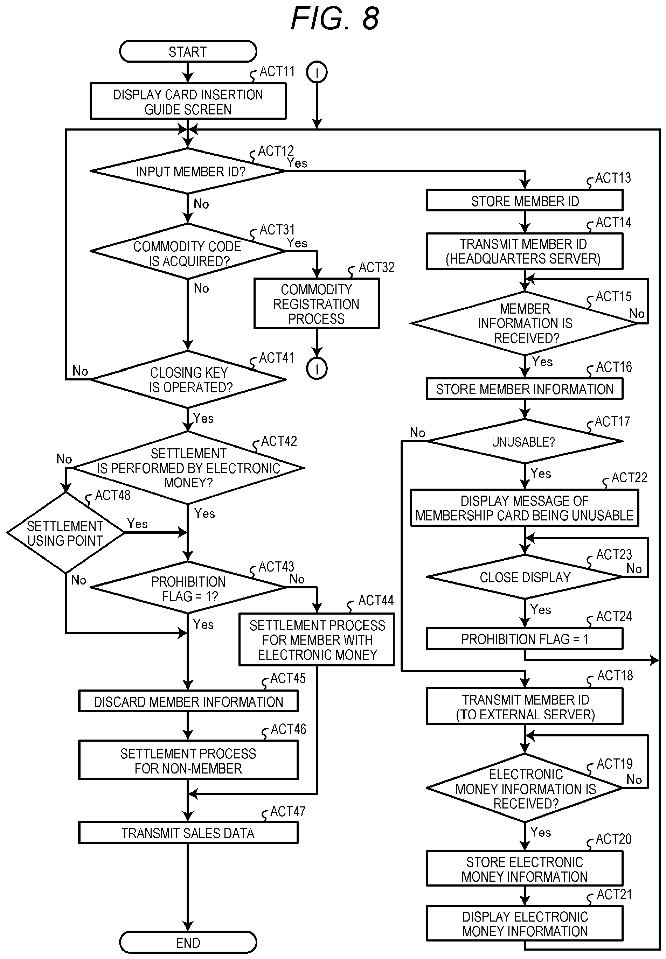

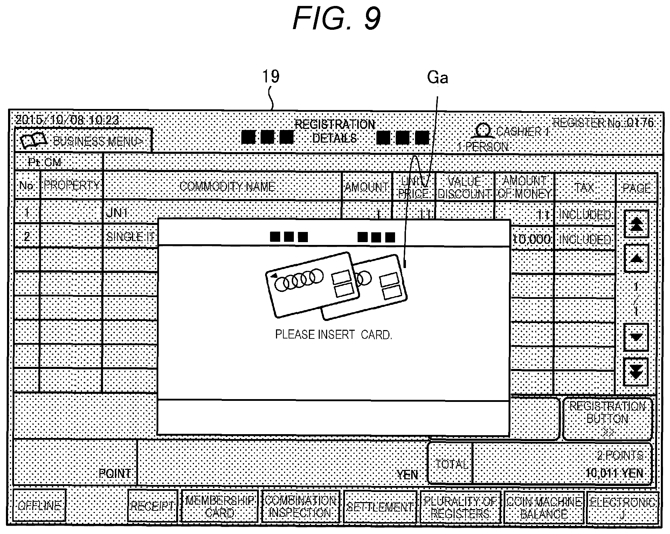

Next, the control for the POS terminal 1 will be described. FIG. 8 is a flowchart showing a flow of a control process for the POS terminal 1. As shown in FIG. 8, the control unit 100 of the POS terminal 1 controls the customer display unit 19 to display a screen Ga indicating that the membership card is operated for the customer (ACT11). FIG. 9 shows an example of the screen Ga displayed on the customer display unit 19 when a membership card is inserted into the card reader 21. As shown in FIG. 9, for example, at least a display of "please insert card" is displayed on the customer display unit 19 to cause a customer who is a member to insert a membership card. When the membership card is inserted, the card reader 21 reads the member ID stored in the membership card.

Next, the control unit 100 determines whether the card reader 21 reads the member ID (ACT12). If it is determined that the member ID is read (Yes in ACT12), the acquisition unit 101 stores the read member ID in the member ID area 131 (ACT13).

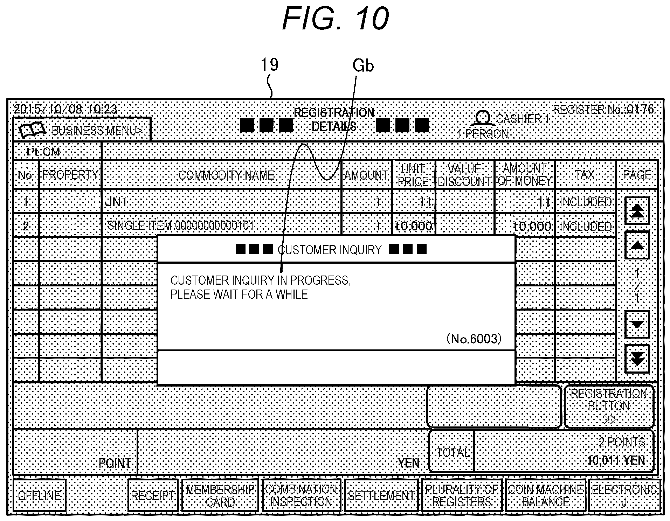

Next, the transmission unit 102 controls the communication unit 23 to transmit the acquired member ID to the headquarters server 7 via the store server 3 (ACT14). Then, the control unit 100 determines whether the member information corresponding to the member ID transmitted from the headquarters server 7 is received (ACT15). The control unit 100 wait until the member information is received (No in ACT15). During the waiting period, as shown in FIG. 10, a screen Gb indicating the waiting period for receiving the member information is displayed on at least one of the salesclerk display unit 18 and the customer display unit 19. In the example in FIG. 10, as the screen Gb, a message that "customer inquiry in progress, please wait for a while" indicating the waiting period for receiving the member information from the headquarters server 7 is displayed at least on the customer display unit 19. If it is determined that the member information is received (Yes in ACT15), the storage unit 106 stores the member information of the customer identified by the member ID transmitted in ACT14 that is received from the headquarters server 7 via the store server 3 in the member information area 133 (ACT16).

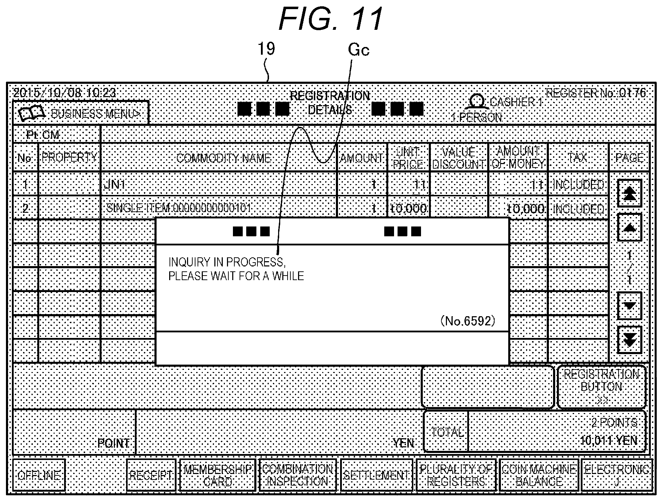

Next, the determination unit 103 determines whether flag information (that is, information in which the flag is "1") indicating the unusable card is included in the received member information (ACT17). If it is determined that the flag information indicating the unusable card is not included (that is, if the flag is "0") (No in ACT17), the transmission control unit 105 controls the communication unit 23 to transmit the member ID acquired in ACT13 to the external server 9 via the store server 3 (ACT18). Then, the control unit 100 determines whether the electronic money information corresponding to the transmitted member ID has been received from the external server 9 via the store server 3 (ACT19). The control unit 100 waits until the electronic money information is received (No in ACT19). During the waiting period, as shown in FIG. 11, a screen Gc indicating the waiting period for receiving the electronic money information is displayed on at least one of the salesclerk display unit 18 and the customer display unit 19. In the example in FIG. 11, as the screen Gc, a message that "inquiry in progress, please wait for a while" indicating that the control unit 100 waits for a response from the external server 9 is displayed at least on the customer display unit 19.

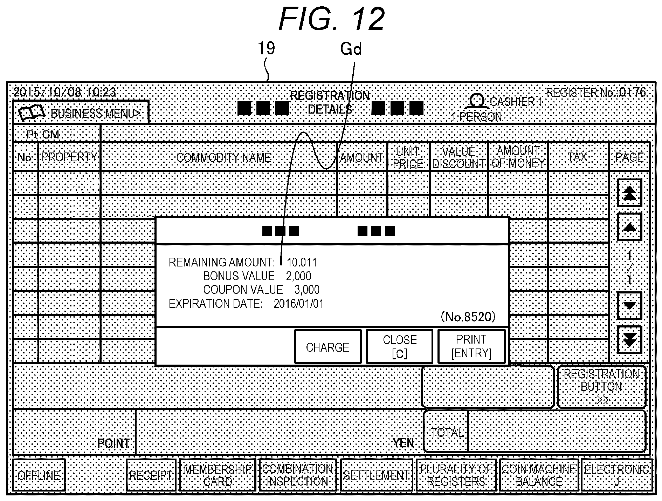

After the electronic money information is received (Yes in ACT19), the control unit 100 stores the received electronic money information in the member information area 133 in association with the member ID (ACT20). Then, the control unit 100 controls at least one of the salesclerk display unit 18 and the customer display unit 19 to display the received electronic money information (ACT21). FIG. 12 is an example of a screen showing electronic money information Gd displayed in ACT21. As shown in FIG. 12, the control unit 100 controls the customer display unit 19 to display at least information of a remaining amount of 10011 yen, a bonus value of 2000 yen, and a coupon value of 3000 yen as the electronic money information, and its expiration date. The customer checks the displayed electronic money information. If an amount of the electronic money is insufficient, the electronic money account may be additionally charged with cash payment or the like. Then, the control unit 100 returns to ACT12.

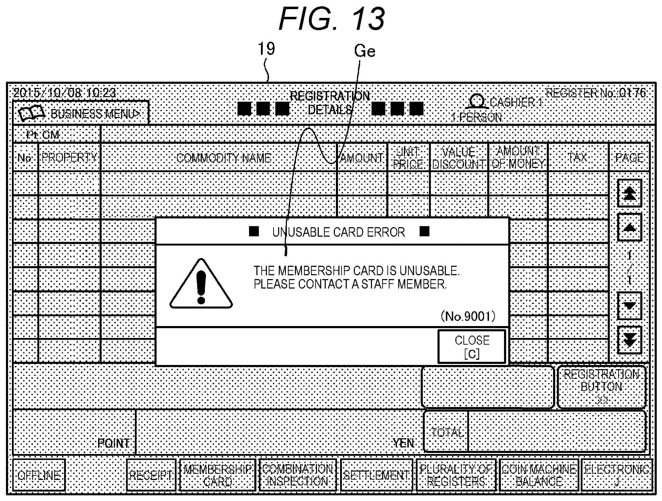

If it is determined in ACT17 that the flag information indicating the unusable card is included (that is, if the flag is "1") (Yes in ACT17), the display unit 104 controls at least one of the salesclerk display unit 18 and the customer display unit 19 to display a message indicating that the membership card is unusable (ACT22). FIG. 13 is an example of a screen showing a message Ge displayed in ACT22. In FIG. 13, for example, the message Ge that "the membership card is unusable. Please contact a staff member." is displayed at least on the customer display unit 19 in a pop-up manner. The message Ge is closed by operating a "close" button Gda. The "close" button Gda is operated by the customer, for example.

Next, the control unit 100 determines whether the message Ge displayed in ACT22 is closed (ACT23). The control unit 100 waits until the message Ge is closed (No in ACT23), and if it is determined that the message Ge is closed (Yes in ACT23), the control unit 100 stores the flag "1" in the prohibition flag area 134. Then, the control unit 100 returns to ACT12.

That is, if it is determined that the flag information indicating the unusable card is included (Yes in ACT17), the transmission control unit 105 does not control the communication unit 23 to transmit the member ID to the external server 9. Therefore, if it is determined that the flag information indicating the unusable card is included (Yes in ACT17), the control unit 100 does not acquire the electronic money information from the external server 9.

If it is determined that the member ID is not input (No in ACT12), the control unit 100 next determines whether the code reader 20 reads the code symbol attached to the commodity to acquire the commodity code identifying the commodity (ACT31). If it is determined that the commodity code is acquired (Yes in ACT31), the control unit 100 executes the commodity registration process of reading commodity information from the commodity master DB 142 based on the acquired commodity code and storing the commodity information in the commodity information area 132 (ACT32). Then, the control unit 100 returns to ACT12. The member ID can be input before the commodity registration process or during the commodity registration, but when the member ID is not input during the commodity registration process, the control unit 100 may return to ACT11 after executing the process of ACT32 to cause the member to input the member ID.

If it is determined that the commodity code is not input (No in ACT31), the control unit 100 next determines whether the closing key 171 is operated (ACT41). If it is determined that the closing key 171 is not operated (No in ACT41), the control unit 100 returns to ACT12, and if it is determined that the closing key 171 is operated (Yes in ACT41), the control unit 100 then determines whether a settlement performed by the electronic money is selected (ACT42). When an electronic money button provided in the operation unit 17 is operated, the control unit 100 determines that the settlement performed by the electronic money has been selected.

If it is determined that the electronic money settlement is selected (Yes in ACT42), the control unit 100 next determines whether the flag "1" or the flag "0" is stored in the prohibition flag area 134 (ACT43). If the flag "0" is stored (No in ACT43), since the membership card of the member is not the unusable card and rewards for the member (i.e., points) are provided, the control unit 100 executes the settlement process using the electronic money (ACT44). In the process of ACT44, points corresponding to the amount of money settled by the electronic money are given. The given points are added to the points stored in the point information field 7433. Then, the control unit 100 controls the communication unit 23 to transmit the settlement information and the commodity information subjected to the settlement process to the headquarters server 7 (ACT47). Then, the control unit 100 ends the process.

If the flag "1" is stored (Yes in ACT43), the discarding unit 107 discards the member information stored in the member information area 133 (ACT45). Then, since no rewards are provided, the control unit 100 cannot perform the settlement by the electronic money, selects a settlement method for a non-member, and executes the settlement process (ACT46). In this case, since the rewards for the member are not provided, points corresponding to the amount of money of the settlement are not given. Then, the control unit 100 controls the communication unit 23 to transmit the settlement information and the commodity information subjected to the settlement process to the headquarters server 7 (ACT47). Then, the control unit 100 ends the process.

If it is determined in ACT42 that electronic money settlement is not selected (No in ACT42), the control unit 100 determines whether the settlement using points is selected (ACT48). When a points button provided in the operation unit 17 is operated, the control unit 100 determines that the settlement using reward points has been selected. If it is determined that the settlement using points is selected (Yes in ACT48), the control unit 100 executes the processes of ACT43 to ACT47. In this case, if it is determined as No (the prohibition flag is "0") in ACT43, the rewards for the member are provided, and therefore, in ACT44, the settlement process using the points (the points stored in the point information field 7433) included in the member information is executed (ACT44). If it is determined as Yes (the prohibition flag is "1") in ACT43, since the rewards for the member are not given, the member information is discarded in ACT45, the settlement cannot be performed using the points since no rewards for the member are provided, the settlement method selectable by the non-member is selected, and the settlement process is executed (ACT46). In this case, since no rewards for the member are provided, points corresponding to the amount of money of the settlement are not given.

If it is determined that the settlement using the points is not selected (No in ACT48), the control unit 100 executes the processes of ACT45 to ACT47 using the selected medium other than the electronic money and the points. Then, the control unit 100 ends the process. In this case, points corresponding to the amount of money of the settlement are not given.

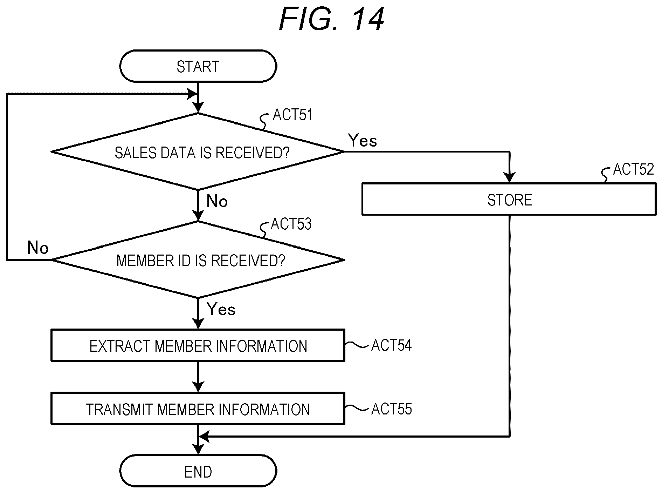

Next, the control for the headquarters server 7 will be described. FIG. 14 is a flowchart showing a flow of a control process for the headquarters server 7. As shown in FIG. 14, the control unit 700 of the headquarters server 7 determines whether the sales data of the store T is received from the store server 3 (ACT51). If it is determined that the sales data is received from the store server 3 (Yes in ACT51), the control unit 700 adds the received sales data to the sales management area 731 and stores the data (ACT52). Then, the control unit 700 ends the process.

If it is determined that the sales data is not received (No in ACT51), the control unit 700 determines whether the member ID is received from the store server 3 (ACT53). If it is determined that the member ID is not received (No in ACT53), the process returns to ACT51, and if it is determined that the member ID is received (Yes in ACT53), the control unit 700 searches the member master DB 743 based on the received member ID and extracts the member information corresponding to the member ID (ACT54). Then, the control unit 700 controls the communication unit 79 to transmit the extracted member information to the store server 3 from which the member ID is transmitted (ACT55). Then, the control unit 700 ends the process. The store server 3 transmits the received member information to the POS terminal 1 from which the member ID is transmitted to the store server 3.

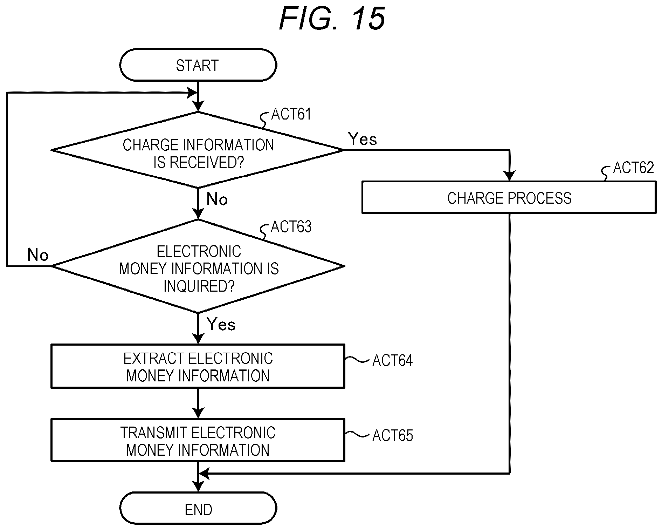

Next, the control for the external server 9 will be described. FIG. 15 is a flowchart showing a flow of a control process for the external server 9. As shown in FIG. 15, the control unit 900 of the external server 9 determines whether charge information is received together with the member ID from the store server 3 (ACT61). If it is determined that the charge information is received (Yes in ACT61), the control unit 900 adds the amount of the charged electronic money included in the received charge information to the electronic money information area 9423 corresponding to the received member ID and stores the added amount (ACT62). Then, the control unit 700 ends the process.

If it is determined that the charge information is not received (No in ACT61), the control unit 900 next determines whether the member ID is received from the store server 3 (ACT63). If it is determined that the member ID is not received (No in ACT63), the process returns to ACT61, and if it is determined that the member ID is received (Yes in ACT63), the control unit 900 searches the electronic money information area 9423 based on the received member ID and extracts the electronic money information corresponding to the member ID (ACT64). Then, the control unit 900 transmits the extracted electronic money information to the store server 3 from which the member ID was transmitted (ACT65). Then, the control unit 700 ends the process. The store server 3 transmits the received electronic money information to the POS terminal 1 from which the member ID was transmitted to the store server 3.

As described above, the POS terminal 1 executes the functions of the acquisition unit 101 configured to acquire a member ID for identifying a member, the transmission unit 102 configured to control the communication unit 23 to transmit the acquired member ID to the headquarters server 7 configured to store member information of the member in association with the member ID via the store server 3, the determination unit 103 configured to determine whether a membership card for the member identified by the transmitted member ID is usable based on member information that is received from the headquarters server 7 via the store server 3 and that corresponds to the member ID, and the display unit 104 configured to control at least one of the salesclerk display unit 18 and the customer display unit 19 to display, if it is determined that the membership card is unusable, a message indicating that the membership card is unusable.

The POS terminal 1 determines whether the membership card corresponding to the acquired member ID is usable or unusable, and displays a message indicating that the membership card is unusable if the membership card is unusable. Therefore, a settlement performed in a non-cash manner using an unusable membership card can be prevented.

Although some embodiments according to the disclosure are described above, such embodiments are presented as examples and are not intended to limit the scope of the disclosure. The embodiments described herein may be achieved in a variety of other forms, and various omissions, substitutions, changes, and combinations may be made without departing from the scope of the disclosure. The embodiments and the modification thereof are included in the scope and gist of the disclosure, and are included in the scope of disclosure disclosed in the scope of claims and equivalents thereof.

For example, in the embodiments described above, the member ID is transmitted from the POS terminal 1 to the headquarters server 7 and the external server 9 via the store server 3. However, the disclosure is not limited thereto, and the POS terminal 1 may directly transmit the member ID to the headquarters server 7 and the external server 9 without passing through the store server 3. The POS terminal 1 receives the member information from the headquarters server 7 via the store server 3. However, the disclosure is not limited thereto, and the POS terminal 1 may directly receive the member information from the headquarters server 7 without passing through the store server 3. The POS terminal 1 receives the electronic money information from the external server 9 via the store server 3. However, the disclosure is not limited thereto, and the POS terminal 1 may directly receive the electronic money information from the external server 9 without passing through the store server 3.

In the embodiments described above, the settlement performed by the electronic money and the settlement using points are described as the settlement performed in the non-cash manner. However, the settlement performed in the non-cash manner is not limited to the electronic money and the points, and any medium may be used as long as the settlement is performed without using cash.

A control program executed by the POS terminal 1 according to the embodiments described above is recorded as a file in an installable or executable format on a non-transitory, computer-readable recording medium such as a CD-ROM, a flexible disk (FD), a CD-R, and a digital versatile disk (DVD).

The program executed by the POS terminal 1 according to the embodiments may be stored in a computer connected to a network such as the Internet and downloaded via the network. Further, the program executed by the POS terminal 1 according to the embodiments may be provided, accessed, or distributed via the network such as the Internet.

The program executed by the POS terminal 1 according to the embodiments may be stored in the ROM 12 in advance.

## Claims

1. A point-of-sale, POS, terminal (1) in a store connectable with a network interface (23) to a first server (7) that stores information (743) about a customer of the store, the information associating identification information of the customer (7431) with a state (7434) of a medium issued to the customer that is usable for payment in a sales transaction via the POS terminal; the POS terminal comprising a memory (13) and a processor (11) configured to:
acquire (Act 12) identification information of a customer in a sales transaction,
control the network interface to transmit (Act 14) the acquired identification information to the first server, acquire (Act 15) from the first server the state of the medium issued to the customer, store (Act 16) the state of the medium acquired from the first server in the memory, and determine (Act 17) whether the medium is in an unusable state based on the state of the medium,
upon determining that the medium is in a usable state, accept (Acts 43, 44) the medium for payment in the sales transaction, and
upon determining that the medium is in the unusable state, display (Act 22) a message indicating that the medium is unusable for payment,
**characterized in that** the processor is configured to delete (Act 45) the state of the medium stored in the memory after determining that the medium is in the unusable state and before completing the sales transaction.

2. The POS terminal according to claim 1, wherein
the network interface is connectable to a second server (9) that manages electric money usable for payment in a sales transaction, and
the processor is configured to, after determining that the medium is not in the unusable state:
control the network interface to transmit (Act 18) the identification information of the customer to the second server, and acquire (Act 19) electric money information associated with the customer (942), such that payment in the sales transaction is performed using the electric money.

3. The POS terminal according to claim 2, wherein the processor is configured to display (Act 21) the electric money information.

4. The POS terminal according to any one of claims 1 to 3, wherein the processor is configured to:
upon receipt (Act 31) of a code of a commodity, register (Act 32) the commodity for purchase by the customer in the sales transaction, and
in response to a request (Act 41) for executing a payment process in the sales transaction using electronic money:
when the medium is in the usable state (Act 43), execute (Act 44) the payment process using electronic money, and
when the medium is in the unusable state (Act 43), execute (Act 46) the payment process not using electronic money.

5. The POS terminal according to claim 4, wherein the processor is configured to calculate rewards earned by the customer in the sales transaction after executing the payment process using electronic money.

6. The POS terminal according to claim 4 or 5, wherein the processor is configured to:
after executing the payment process, generate sales data corresponding to the sales transaction, and
control the network interface to transmit (Act 47) the sales data to the first server.

7. A method performed by a point-of-sales, POS, terminal (1) in a store for managing customer information (743) received by the point-of-sale, the method comprising:
connecting (Act 14) to a first server (7) that stores information (743) about a customer of the store, the information associating identification information of the customer (7431) with a state (7434) of a medium issued to the customer and usable for payment in a sales transaction at the POS terminal;
acquiring (Act 12) identification information of the customer in the sales transaction;
transmitting (Act 14) the acquired identification information to the first server, acquiring (Act 15) a state of the medium issued to the customer, storing (Act 16), in a memory (13) of the POS terminal, the state of the medium acquired from the first server, and based on the state of the medium determining (Act 17) whether the medium is in an unusable state;
upon determining (Act 17) that the medium is not in the unusable state, accepting (Acts 43, 44) the medium for payment in the sales transaction;
upon determining (Act 17) that the medium is in the unusable state, displaying (Act 22) a message indicating that the medium is unusable for payment;
**characterized in** deleting (Act 45) the state of the medium stored in the memory after determining that the medium is in the unusable state and before completing the sales transaction.

8. The method according to claim 7, further comprising:
connecting (Act 18) to a second server (9) that manages electric money usable for payment in a sales transaction; and
after determining that the medium is not in the unusable state:
transmitting (Act 18) the identification information of the customer to the second server, and acquiring (Act 19) electric money information associated with the customer (942), such that payment in the sales transaction is performed using the electric money.

9. The method according to claim 8, further comprising:
displaying (Act 21) the electric money information.

10. The method according to any one of claims 7 to 9, further comprising:
upon receipt (Act 31) of a code of a commodity, registering (Act 32) the commodity for purchase by the customer in the sales transaction; and
in response to a request (Act 41) for executing a payment process in the sales transaction using electronic money:
when the medium is in a usable state (Act 43), executing (Act 44) the payment process using electronic money, and
when the medium is in the unusable state (Act 43), executing (Act 46) the payment process not using electronic money.

11. The method according to claim 10, further comprising:
calculating rewards earned by the customer in the sales transaction after executing the payment process using electronic money.

12. The method according to claim 10 or 11, further comprising:
after executing the payment process, generating sales data corresponding to the sales transaction; and
transmitting (Act 47) the sales data to the first server.

13. A store system (10), comprising:
a point-of-sale, POS, terminal (1) according to any one of claims 1 to 6;
a first server (7) that stores information (743) of a customer of the store, the information associating identification information of the customer (7431) with a state (7434) of a medium issued for the customer and usable for payment in a sales transaction via the POS terminal; and
a second server (9) that manages electric money usable for payment in a sales transaction.

## Patentansprüche

1. Terminal für Verkaufsstelle, POS, (1) in einem Ladengeschäft, das mit einer Netzschnittstelle (23) mit einem ersten Server (7) verbindbar ist, der Informationen (743) über einen Kunden des Ladengeschäfts speichert, wobei die Informationen Identifizierungsinformationen des Kunden (7431) mit einem Zustand (7434) eines an den Kunden ausgegebenen Mediums assoziieren, das zur Zahlung in einer Verkaufstransaktion über das POS-Terminal verwendbar ist; das POS-Terminal umfassend einen Speicher (13) und einen Prozessor (11), der zu Folgendem konfiguriert ist:
Erfassen (Vorgang 12) von Identifizierungsinformationen eines Kunden bei einer Verkaufstransaktion,
Steuern der Netzschnittstelle, um die erfassten Identifizierungsinformationen an den ersten Server zu übertragen (Vorgang 14), den Zustand des an den Kunden ausgegebenen Mediums von dem ersten Server zu erfassen (Vorgang 15), den von dem ersten Server erfassten Zustand des Mediums in dem Speicher zu speichern (Vorgang 16), und basierend auf dem Zustand des Mediums zu bestimmen (Vorgang 17), ob das Medium in einem unbrauchbaren Zustand ist,
nach Bestimmen, dass das Medium in einem brauchbaren Zustand ist, Annehmen (Vorgang 43, 44) des Mediums zur Zahlung in der Verkaufstransaktion, und
nach Bestimmen, dass das Medium in dem unbrauchbaren Zustand ist, Anzeigen (Vorgang 22) einer Meldung, die angibt, dass das Medium zur Zahlung unbrauchbar ist,
**dadurch gekennzeichnet, dass** der Prozessor konfiguriert ist, um nach Bestimmen, dass das Medium in dem unbrauchbaren Zustand ist, und vor Abschließen der Verkaufstransaktion den in dem Speicher gespeicherten Zustand des Mediums zu löschen (Vorgang 45).

2. POS-Terminal nach Anspruch 1, wobei
die Netzschnittstelle mit einem zweiten Server (9) verbindbar ist, der elektrisches Geld verwaltet, das zur Zahlung in einer Verkaufstransaktion verwendet werden kann, und
der Prozessor konfiguriert ist, um nach Bestimmen, dass das Medium nicht in dem unbrauchbaren Zustand ist:
die Netzschnittstelle zu steuern, um die Identifizierungsinformationen des Kunden an den zweiten Server zu übertragen (Vorgang 18), und mit dem Kunden (942) assoziierte Informationen über elektrisches Geld zu erfassen (Vorgang 19), sodass eine Zahlung in der Verkaufstransaktion unter Verwendung des elektrischen Gelds durchgeführt wird.

3. POS-Terminal nach Anspruch 2, wobei der Prozessor konfiguriert ist, um die Informationen über elektrisches Geld anzuzeigen (Vorgang 21).

4. POS-Terminal nach einem der Ansprüche 1 bis 3, wobei der Prozessor zu Folgendem konfiguriert ist:
nach Erhalt (Vorgang 31) eines Codes einer Ware die Ware, Registrieren (Vorgang 32) der Ware zum Kauf durch den Kunden in der Verkaufstransaktion und
als Reaktion auf eine Aufforderung (Vorgang 41) zum Durchführen eines Zahlungsprozesses in der Verkaufstransaktion unter Verwendung von elektronischem Geld:
wenn das Medium in dem brauchbaren Zustand ist (Vorgang 43), Ausführen (Vorgang 44) des Zahlungsprozesses unter Verwendung von elektronischem Geld, und
wenn das Medium in dem unbrauchbaren Zustand ist (Vorgang 43), Ausführen (Vorgang 46) des Zahlungsprozesses nicht unter Verwendung von elektronischem Geld.

5. POS-Terminal nach Anspruch 4, wobei der Prozessor konfiguriert ist, um Prämien berechnet, die der Kunde bei der Verkaufstransaktion nach Ausführen des Zahlungsprozesses unter Verwendung von elektronischem Geld verdient hat.

6. POS-Terminal nach Anspruch 4 oder 5, wobei der Prozessor zu Folgendem konfiguriert ist:
nach Ausführen des Zahlungsprozesses, Erzeugen von Verkaufsdaten, die der Verkaufstransaktion entsprechend, und
Steuern der Netzschnittstelle, um die Verkaufsdaten an den ersten Server zu übertragen (Vorgang 47).

7. Verfahren, durchgeführt von einem Terminal für Verkaufsstelle, POS, (1) in einem Ladengeschäft zum Verwalten von Kundeninformationen (743), die von der Verkaufsstelle erhalten werden, das Verfahren umfassend:
Verbinden (Vorgang 14) mit einem ersten Server (7), der Informationen (743) über einen Kunden des Ladengeschäfts speichert, wobei die Informationen Identifizierungsinformationen des Kunden (7431) mit einem Zustand (7434) eines Mediums assoziieren, das an den Kunden ausgegeben wird und zur Zahlung in einer Verkaufstransaktion an dem POS-Terminal verwendbar ist;
Erfassen (Vorgang 12) von Identifizierungsinformation des Kunden in der Verkaufstransaktion;
Übertragen (Vorgang 14) der erfassten Identifizierungsinformationen an den ersten Server, Erfassen (Vorgang 15) eines Zustands des an den Kunden ausgegebenen Mediums, Speichern (Vorgang 16) des von dem ersten Server erfassten Zustands des Mediums in einem Speicher (13) des POS-Terminals und basierend auf dem Zustand des Mediums zu bestimmen (Vorgang 17), ob das Medium in einem unbrauchbaren Zustand ist;
nach Bestimmen (Vorgang 17), dass das Medium nicht in dem unbrauchbaren Zustand ist, Annehmen (Vorgang 43, 44) des Mediums zur Zahlung in der Verkaufstransaktion;
nach Bestimmen (Vorgang 17), dass das Medium in dem unbrauchbaren Zustand ist, Anzeigen (Vorgang 22) einer Meldung, die angibt, dass das Medium zur Zahlung unbrauchbar ist;
**dadurch gekennzeichnet, dass** der in dem Speicher gespeicherte Zustand des Mediums nach Bestimmen, dass das Medium in dem unbrauchbaren Zustand ist, und vor Abschließen der Verkaufstransaktion gelöscht wird (Vorgang 45).

8. Verfahren nach Anspruch 7, ferner umfassend:
Verbinden (Vorgang 18) mit einem zweiten Server (9), der elektrisches Geld verwaltet, das zur Zahlung in einer Verkaufstransaktion verwendbar ist; und
nach Bestimmen, dass das Medium nicht in dem unbrauchbaren Zustand ist:
Übertragen (Vorgang 18) der Identifizierungsinformationen des Kunden an den zweiten Server und Erfassen (Vorgang 19) von Informationen über elektrisches Geld, die mit dem Kunden (942) assoziiert sind, sodass eine Zahlung in der Verkaufstransaktion unter Verwendung des elektrischen Gelds durchgeführt wird.

9. Verfahren nach Anspruch 8, ferner umfassend:
Anzeigen (Vorgang 21) der Informationen über elektrisches Geld.

10. Verfahren nach einem der Ansprüche 7 bis 9, ferner umfassend:
nach Erhalt (Vorgang 31) eines Codes einer Ware die Ware, Registrieren (Vorgang 32) der Ware zum Kauf durch den Kunden in der Verkaufstransaktion und
als Reaktion auf eine Aufforderung (Vorgang 41) zum Durchführen eines Zahlungsprozesses in der Verkaufstransaktion unter Verwendung von elektronischem Geld:
wenn das Medium in einem brauchbaren Zustand ist (Vorgang 43), Ausführen (Vorgang 44) des Zahlungsprozesses unter Verwendung von elektronischem Geld, und
wenn das Medium in dem unbrauchbaren Zustand ist (Vorgang 43), Ausführen (Vorgang 46) des Zahlungsprozesses nicht unter Verwendung von elektronischem Geld.

11. Verfahren nach Anspruch 10, ferner umfassend:
Berechnen von Prämien berechnet, die der Kunde bei der Verkaufstransaktion nach Ausführen des Zahlungsprozesses unter Verwendung von elektronischem Geld verdient hat.

12. Verfahren nach Anspruch 10 oder 11, ferner umfassend:
nach Ausführen des Zahlungsprozesses, Erzeugen von Verkaufsdaten, die der Verkaufstransaktion entsprechend, und
Übertragen (Vorgang 47) der Verkaufsdaten an den ersten Server.

13. Ladengeschäftsystem (10), umfassend:
Terminal für Verkaufsstelle, POS, (1) nach einem der Ansprüche 1 bis 6;
einen ersten Server (7), der Informationen (743) eines Kunden des Ladengeschäfts speichert, wobei die Informationen Identifizierungsinformationen des Kunden (7431) mit einem Zustand (7434) eines Mediums assoziieren, das für den Kunden ausgegeben wird und zur Zahlung in einer Verkaufstransaktion über das POS-Terminal verwendbar ist;
einen zweiten Server (9), der elektrisches Geld verwaltet, das zur Zahlung in einer Verkaufstransaktion verwendbar ist.

## Revendications

1. Terminal de point de vente, POS, (1) dans un magasin, pouvant être connecté par l'intermédiaire d'une interface réseau (23) à un premier serveur (7) qui stocke des informations (743) concernant un client du magasin, les informations associant des informations d'identification du client (7431) à un état (7434) d'un support délivré au client, qui est utilisable en vue d'un paiement dans le cadre d'une transaction de vente par l'intermédiaire du terminal POS ; le terminal POS comprenant une mémoire (13), et un processeur (11) configuré pour :
acquérir (action 12) des informations d'identification d'un client dans le cadre d'une transaction de vente,
commander l'interface réseau pour transmettre (action 14) les informations d'identification acquises au premier serveur, acquérir (action 15), auprès du premier serveur, l'état du support délivré au client, stocker (action 16) l'état du support acquis auprès du premier serveur, dans la mémoire, et déterminer (action 17) si le support est dans un état inutilisable sur la base de l'état du support,
lorsqu'il est déterminé que le support est dans un état utilisable, accepter (actions 43, 44) le support en vue du paiement dans le cadre de la transaction de vente, et
lorsqu'il est déterminé que le support est dans un état inutilisable, afficher (action 22) un message indiquant que le support est inutilisable en vue du paiement,
**caractérisé en ce que** le processeur est configuré pour supprimer (action 45) l'état du support stocké dans la mémoire après avoir déterminé que le support est dans un état inutilisable et avant de finaliser la transaction de vente.

2. Terminal POS selon la revendication 1, dans lequel
l'interface réseau peut être connectée à un deuxième serveur (9) qui gère de la monnaie électronique utilisable en vue d'un paiement dans le cadre d'une transaction de vente, et
le processeur est configuré pour, après avoir déterminé que le support n'est pas dans l'état inutilisable :
commander l'interface réseau pour transmettre (action 18) les informations d'identification du client au deuxième serveur, et acquérir (action 19) les informations de monnaie électronique associées au client (942) de sorte que le paiement dans le cadre de la transaction de vente est effectué en utilisant la monnaie électronique.

3. Terminal POS selon la revendication 2, dans lequel le processeur est configuré pour afficher (action 21) les informations de monnaie électronique.

4. Terminal POS selon l'une quelconque des revendications 1 à 3, dans lequel le processeur est configuré pour :
lors de la réception (action 31) d'un code d'une marchandise, enregistrer (action 32) la marchandise en vue d'un achat par le client dans le cadre de la transaction de vente, et
en réponse à une demande (action 41) d'exécution d'un processus de paiement dans le cadre de la transaction de vente au moyen de la monnaie électronique :
lorsque le support est dans l'état utilisable (action 43), exécuter (action 44) le processus de paiement en utilisant la monnaie électronique, et
lorsque le support est dans un état inutilisable (action 43), exécuter (action 46) le processus de paiement sans utiliser la monnaie électronique.

5. Terminal POS selon la revendication 4, dans lequel le processeur est configuré pour calculer des récompenses gagnées par le client dans le cadre de la transaction de vente après avoir exécuté le processus de paiement en utilisant la monnaie électronique.

6. Terminal POS selon la revendication 4 ou 5, dans lequel le processeur est configuré pour :
après avoir exécuté le processus de paiement, générer des données de vente correspondant à la transaction de vente, et
commander l'interface réseau pour transmettre (action 47) les données de vente au premier serveur.

7. Procédé mis en œuvre par un terminal de point de vente, POS, (1) dans un magasin, pour gérer des informations de client (743) reçues par le terminal de point de vente, le procédé comprenant le fait de :
se connecter (action 14) à un premier serveur (7) qui stocke des informations (743) concernant un client du magasin, les informations associant des informations d'identification du client (7431) à un état (7434) d'un support délivré au client, et utilisable en vue d'un paiement dans le cadre d'une transaction de vente au niveau du terminal POS ;
acquérir (action 12) des informations d'identification du client dans le cadre de la transaction de vente ;
transmettre (action 14) les informations d'identification acquises, au premier serveur, acquérir (action 15) un état du support délivré au client, stocker (action 16), dans une mémoire (13) du terminal POS, l'état du support acquis auprès du premier serveur, et sur la base de l'état du support, déterminer (action 17) si le support est dans un état inutilisable ;
lorsqu'il est déterminé (action 17) que le support n'est pas dans un état inutilisable, accepter (actions 43, 44) le support en vue du paiement dans le cadre de la transaction de vente ;
lorsqu'il est déterminé (action 17) que le support est dans un état inutilisable, afficher (action 22) un message indiquant que le support est inutilisable en vue du paiement ;
**caractérisé par** le fait de supprimer (action 45) l'état du support stocké dans la mémoire, après avoir déterminé que le support est dans un état inutilisable et avant de finaliser la transaction de vente.

8. Procédé selon la revendication 7, comprenant en outre le fait de :
se connecter (action 18) à un deuxième serveur (9) qui gère de la monnaie électronique utilisable en vue du paiement dans le cadre d'une transaction de vente ; et
après avoir déterminé que le support n'est pas dans un état inutilisable :
transmettre (action 18) les informations d'identification du client au deuxième serveur, et acquérir (action 19) des informations de monnaie électronique associées au client (942), de sorte que le paiement dans le cadre de la transaction de vente est effectué en utilisant la monnaie électronique.

9. Procédé selon la revendication 8, comprenant en outre le fait de :
afficher (action 21) les informations de monnaie électronique.

10. Procédé selon l'une quelconque des revendications 7 à 9, comprenant en outre le fait de :
lors de la réception (action 31) d'un code d'une marchandise, enregistrer (action 32) la marchandise en vue d'un achat par le client dans le cadre de la transaction de vente ; et
en réponse à une demande (action 41) d'exécution d'un processus de paiement dans le cadre de la transaction de vente au moyen de la monnaie électronique :
lorsque le support est dans un état utilisable (action 43), exécuter (action 44) le processus de paiement en utilisant la monnaie électronique, et
lorsque le support est dans un état inutilisable (action 43), exécuter (action 46) le processus de paiement sans utiliser de monnaie électronique.

11. Procédé selon la revendication 10, comprenant en outre le fait de :
calculer des récompenses gagnées par le client dans le cadre de la transaction de vente après avoir exécuté le processus de paiement en utilisant la monnaie électronique.

12. Procédé selon la revendication 10 ou 11, comprenant en outre le fait de :
après avoir exécuté le processus de paiement, générer des données de vente correspondant à la transaction de vente ; et
transmettre (action 47) les données de vente au premier serveur.

13. Système de magasin (10), comprenant :
un terminal de point de vente, POS, (1) selon l'une quelconque des revendications 1 à 6 ;
un premier serveur (7) qui stocke des informations (743) d'un client du magasin, les informations associant des informations d'identification du client (7431) à un état (7434) d'un support délivré pour le client et utilisable en vue d'un paiement dans le cadre d'une transaction de vente par l'intermédiaire du terminal POS ; et
un deuxième serveur (9) qui gère de la monnaie électronique utilisable en vue du paiement dans le cadre d'une transaction de vente.
